# EUROPEAN PATENT APPLICATION

(11) **EP 4 722 987 A1**
(43) Date of publication of application: **08.04.2026**
(21) Application number: 25205686.6
(22) Date of filing: 30.09.2025
(51) Int. Cl.: G06N 3/063, G06F 7/544

(54) **A NEURAL NETWORK ACCELERATOR USING WEIGHTS IN AN INTEGER-EXPONENT FORMAT**

(30) Priority: 03.10.2024 US 202463702855 P; 24.09.2025 US 202519339155
(71) Applicant: Semiconductor Components Industries, LLC, Scottsdale, AZ 85250 (US)
(72) Inventor: COENEN, Ivo Leonardus, 2207 Coffrane, NE (CH)
(74) Representative: Manitz Finsterwald Patent- und Rechtsanwaltspartnerschaft mbB

(57) **Abstract**

According to an aspect, a method includes receiving a weight of a neural network, identifying a first portion of the weight, identifying a second portion of the weight, generating a multiplication result by multiplying an input value with the first portion of the weight, and generating a scaled multiplication result based on the multiplication result and the second portion of the weight.

## Description

### FIELD OF THE DISCLOSURE

The present disclosure relates to a neural network accelerator using weights in an integer-exponent format, thereby increasing a dynamic range of the weights.

### BACKGROUND

Neural networks are increasingly used for a variety of signal processing applications, ranging from image recognition and natural language processing to speech recognition and decision-making tasks. The proliferation of neural network implementations has expanded from computing centers and data centers into edge devices such as smartphones, wearables, hearing aids, and other battery-powered devices. A neural network accelerator may be a specialized hardware component configured to speed up the computation of neural networks, particularly the matrix operations (e.g., multiply-accumulate operations), and, in some examples, tensor processing, involved in training and/or inference.

In a neural network, weights represent the strength of connections between neurons and determine how much influence one neuron has on another. Weights of a neural network may be determined during training. During inference, the weights are retrieved and used to transform input data through the neural network. For example, when data is passed through the neural network, an input value is multiplied by a corresponding weight. A weight may be referred to as a weight value and can be represented by a number of bits such as 4-bit, 6-bit, 8-bit, 16-bit, or 32-bit, and so forth. In some examples, a weight with a higher number of bits has a higher size (e.g., larger weight). Larger weights may provide higher precision but may be slower and/or more computationally expensive to store and process. Smaller weights can be loaded from memory faster and/or computationally less expensive to process, which can increase the speed and/or reduce the power consumption. Some conventional approaches use a floating-point value to increase the dynamic range of the weights, but, in some examples, weights with floating-point values may increase the power consumption of the neural network.

### SUMMARY

This disclosure relates to an efficient integer-exponent format for encoding neural network weights. Each weight is partitioned into a base portion and a scale portion, enabling a broader dynamic range than standard fixed-point formats, while reducing the area and power costs of the Institute of Electrical and Electronics Engineers (IEEE)-style floating point. The custom format may be tailored for hardware, e.g., supporting integer multipliers followed by shift operations instead of floating point units. This disclosure relates to one or more scaled multiply circuits configured to operate on weights in the integer-exponent format. A scaled multiply circuit performs a base multiply followed by a shift using the scale, emulating floating-point scaling with lower complexity. Some examples include a dual-mode circuit that supports different weight widths (e.g., 8-bit and 12-bit) and selectable shift schemes (e.g., double or triple shifts), thereby enabling runtime adaptability and energy-efficient inference.

In some aspects, the techniques described herein relate to a method including: receiving a weight of a neural network; identifying a first portion of the weight; identifying a second portion of the weight; generating a multiplication result by multiplying an input value with the first portion of the weight; and generating a scaled multiplication result based on the multiplication result and the second portion of the weight.

In some aspects, the techniques described herein relate to a method, wherein generating the scaled multiplication result includes: shifting the multiplication result according to a shift value represented by the second portion of the weight.

In some aspects, the techniques described herein relate to a method, further including: generating, by a plurality of logic gates, a decoded weight based on the weight, the decoded weight having a number of bits greater than the weight; and identifying the first portion and the second portion from the decoded weight.

In some aspects, the techniques described herein relate to a method, further including: discarding a bit from the scaled multiplication result.

In some aspects, the techniques described herein relate to a method, wherein the second portion of the weight represents an exponent value encoded to control a shift operation.

In some aspects, the techniques described herein relate to a method, wherein the first portion of the weight includes a signed integer value, and the second portion includes an unsigned value.

In some aspects, the techniques described herein relate to a method, wherein the first portion and the second portion are identified based on a mode signal indicating one of a plurality of encoding formats.

In some aspects, the techniques described herein relate to an apparatus including: a memory configured to store a weight of a neural network; a multiplier configured to generate a multiplication result by multiplying an input value with a first portion of the weight; and a scaled generator configured to generate a scaled multiplication result based on the multiplication result and a second portion of the weight.

In some aspects, the techniques described herein relate to an apparatus, wherein the scaled generator includes a shifter configured to shift the multiplication result according to a shift value represented by the second portion of the weight.

In some aspects, the techniques described herein relate to an apparatus, wherein the shifter is configured to perform one of a linear shift, a double shift, or a triple shift based on the second portion of the weight.

In some aspects, the techniques described herein relate to an apparatus, wherein the weight includes a plurality of bits, and the first portion and the second portion are non-overlapping subsets of the plurality of bits.

In some aspects, the techniques described herein relate to an apparatus, further including: a decoder configured to generate a decoded weight, the decoder including an implied most significant bit, wherein the first portion and the second portion are identified using the decoded weight.

In some aspects, the techniques described herein relate to an apparatus, wherein the scaled generator is configured to generate the scaled multiplication result by applying a shift operation to the multiplication result without computing a floating-point representation of the weight.

In some aspects, the techniques described herein relate to an apparatus, wherein the scaled generator includes a shifter and one or more multiplexers.

In some aspects, the techniques described herein relate to a non-transitory computer-readable medium storing executable instructions that cause at least one processor to execute operations, the operations including: receiving a weight of a neural network; identifying a first portion of the weight; identifying a second portion of the weight; generating a multiplication result by multiplying an input value with the first portion of the weight; and generating a scaled multiplication result based on the multiplication result and the second portion of the weight.

In some aspects, the techniques described herein relate to a non-transitory computer-readable medium, wherein the operations further include: shifting the multiplication result by a multiple of a bit interval, the multiple determined by the second portion of the weight.

In some aspects, the techniques described herein relate to a non-transitory computer-readable medium, wherein the operations further include: receiving a mode signal indicating an encoding scheme of the weight; and in response to the mode signal, selects a logic path to interpret the weight.

In some aspects, the techniques described herein relate to a non-transitory computer-readable medium, wherein the operations further include: generating the scaled multiplication result without computing a floating-point representation of the weight.

In some aspects, the techniques described herein relate to a non-transitory computer-readable medium, wherein the operations further include: executing one or more logic operations on the weight to generate a decoded weight; and identifying the first portion of the weight and the second portion of the weight using the decoded weight.

In some aspects, the techniques described herein relate to a non-transitory computer-readable medium, wherein the operations further include: executing a truncation operation to the scaled multiplication result to adjust a bit length of the scaled multiplication result.

The foregoing illustrative summary, as well as other exemplary objectives and/or advantages of the disclosure, and the manner in which the same are accomplished, are further explained within the following detailed description and its accompanying drawings.

### BRIEF DESCRIPTION OF THE DRAWINGS

FIG. 1A depicts a neural network system having an accelerator having a scaled multiply circuit configured to use weights in an integer-exponent format according to an aspect.
FIG. 1B illustrates a fully connected neural network according to an aspect.
FIG. 1C illustrates a partially connected neural network having omitted weights according to an aspect.
FIG. 2A illustrates an example of a scaled multiply circuit according to an aspect.
FIG. 2B illustrates an example of an accelerator with a plurality of scaled multiply circuits according to an aspect.
FIG. 3 illustrates an example of a scaled multiply circuit according to another aspect.
FIG. 4 illustrates an example of a scaled multiply circuit according to another aspect.
FIG. 5 illustrates an example of a decoder configured to generate weights in an integer format or an integer-exponent format according to an aspect.
FIG. 6 illustrates an example of an integer and a scaled multiply circuit according to another aspect.
FIG. 7 illustrates an example of an integer and a scaled multiply circuit according to another aspect.
FIG. 8 illustrates an example of an integer and a scaled multiply circuit according to another aspect.
FIG. 9 illustrates an example of an accelerator according to another aspect.
FIG. 10 illustrates a neural network system according to an aspect.
FIG. 11 illustrates a flowchart depicting example operations for using weights in an integer-exponent format for computing multiplication operations in a neural network according to an aspect.

### DETAILED DESCRIPTION

This disclosure relates to a neural network system that uses an integer-exponent format for weights of a neural network that can provide a high dynamic range, comparable to floating-point numbers, while reducing the low power consumption and/or increasing hardware efficiency of integer operations. The neural network system can efficiently process smaller weights, thereby providing faster loading times from memory, thus accelerating neural network execution and/or reducing power consumption. The integer-exponent format may blend the advantages of floating-point and integer representations. In some examples, the integer-exponent format includes a base portion (e.g., a two's complement integer value) and scale portion (e.g., a shift value). The neural network may achieve a high dynamic range comparable to floating-point numbers while, in some examples, using integer-based hardware for processing.

For example, the integer-exponent format divides each weight into a base portion and a scale portion, enabling a compact representation that achieves greater dynamic range than conventional integer-only formats. A scaled multiply circuit receives an input value and a weight encoded in the integer-exponent format, performs a multiplication using the base portion, and applies a shift operation using the scale portion. This approach may approximate floating-point behavior using integer arithmetic hardware, thereby reducing gate count, power consumption, and/or silicon area as compared to floating-point implementations (e.g., full floating-point implementations).

In some examples, the neural network system supports multiple operational modes to handle different integer-exponent format configurations. In a first mode, the scaled multiply circuit includes a first multiplier and a second multiplier that applies scale adjustment, along with logic for sign extension and/or zero-padding. In a second mode, the scaled multiply circuit uses a shifter to apply the scale portion of the weight. In some examples, a set of multiplexers and associated control logic enables selective activation or isolation of the second multiplier and the shifter, depending on the selected mode. This dual-mode or multi-mode architecture may allow the accelerator to dynamically adapt to the desired weight precision or range, thereby improving power efficiency and resource usage for different types of neural network layers.

In some examples, the neural network system includes an encoder configured to convert weights (e.g., weight values) into the integer-exponent format, extracting the base and scale components. The accelerator may include an array of scaled multiply circuits operating in parallel (e.g., at least partially in parallel), with their outputs combined through an adder arrangement, accumulator, bias processing logic, and an activation function block. This scalable hardware pipeline may enable efficient, high-throughput execution of multiply-accumulate operations on weights encoded in the integer-exponent format, thereby providing an efficient neural network, which can be used in low power applications.

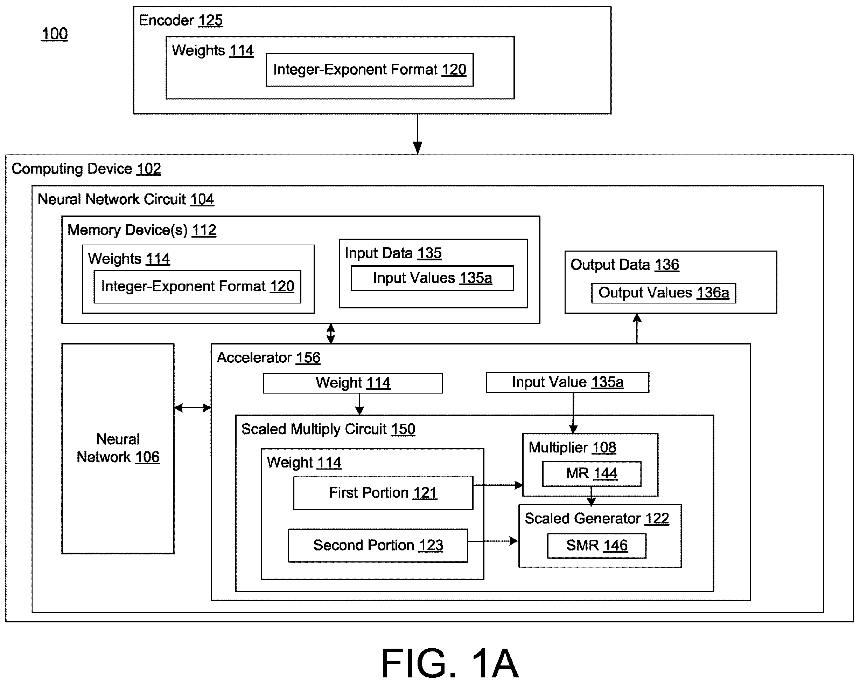

FIGS. 1A to 1C illustrate a neural network system 100 according to an aspect. The neural network system 100 includes a computing device 102 configured to execute a neural network circuit 104. In some examples, the neural network circuit 104 is a system on chip (SOC) device (e.g., an integrated circuit coupled to a semiconductor substrate). In some examples, the computing device 102 is an edge device (e.g., a wearable device, a smartphone, etc.) configured to execute a neural network 106. In some examples, the computing device 102 is a server computer. The neural network circuit 104 includes one or more memory devices 112 and an accelerator 156 configured to execute a neural network 106. In some examples, the neural network circuit 104 includes multiple accelerators 156. The accelerator 156 may be a specialized component configured to increase the speed of execution of the neural network 106.

The neural network system 100 includes an encoder 125 configured to encode weights 114 of the neural network 106 in an integer-exponent format 120. In some examples, the integer-exponent format 120 is a numeric representation that includes a first portion 121 and a second portion 123. The first portion 121 may be a signed integer value, such as a two's complement integer, and the second portion 123 may be a shift value that specifies a scaling factor to be applied to the result of a multiplication involving the first portion 121. In some examples, the shift value represented by the second portion 123 is applied as a left shift to increase the dynamic range of the result. In some examples, the first portion 121 may include an implied most significant bit. The integer-exponent format 120 enables a weight 114 to be stored using fewer bits while providing a dynamic range similar to a floating-point value. The integer-exponent format 120 is compatible with fixed-point arithmetic and avoids floating-point multiply operations.

In some examples, the weight 114 is encoded as an 8-bit value having a first portion 121 that reflects with a two's complement with an implied MSB (e.g., five-bits), and a second portion 123 that specifies a shift amount (e.g., three-bits). In some examples, the weight 114 is encoded as an 8-bit value having a first portion 121 (e.g., six-bit two's complement) and a second portion 123 (e.g., a two-bit shift value), where the second portion 123 indicates a shift value (e.g., a left shift of 0, 2, 4, or 6 bits) (e.g., double-shift format). In some examples, the weight 114 may be a six-bit value including a two's complement (e.g., four-bit) for the first portion 121 and a two-bit shift for the second portion 123, where the second portion 123 indicates a shift value (e.g., a left shift of 0, 3, 6, or 9 bits) (e.g., triple-shift format). The integer-exponent format 120 enables a higher dynamic range for the weight 114 compared to conventional fixed-point formats, while avoiding floating-point multiplication.

A weight 114 may be an N-bit value such as a 4-bit weight, an 8-bit weight, a 16-bit weight, or a 32-bit weight, where N is any integer greater or equal to four. In some examples, a weight 114 may represent the strength of the connection between neurons. If the weight 114 from neuron A to neuron B has a greater magnitude, it means that neuron A has greater influence over neuron B. A weight 114 includes a sequence of bits, where each bit has a bit value. The number of weights 114 corresponds to the number of multiply-accumulate operations that must be performed to execute the neural network 106 once.

In some examples, a weight 114 is encoded into the integer-exponent format 120 by separating the weight 114 into the first portion 121 and the second portion 123. The first portion 121 includes a signed integer value representing a base or mantissa. The second portion 123 includes a shift value representing a scaling factor. The shift value may be applied as a left shift to the result of a multiplication involving the first portion 121. The number of bits assigned to the first portion 121 and second portion 123 may vary depending on the format, allowing tradeoffs between range and precision. The combined format enables the representation of a wide range of scaled weight values while maintaining compatibility with integer-based arithmetic circuits.

In some examples, the encoding process includes formatting the first portion 121 using a two's complement representation. In some examples, the first portion 121 may include an implied most significant bit, which is restored using decoder logic prior to multiplication. The second portion 123 may be encoded using a fixed number of bits that indicate a shift amount, which may be linear, double-spaced, or triple-spaced. For example, a second portion 123 may indicate a shift of 0, 2, 4, or 6 bits. The resulting integer-exponent format 120 may be stored in a memory device 112 and later retrieved by the accelerator 156 for processing during inference.

In some examples, the encoder 125 is configured to convert fixed-point or floating-point weights into the integer-exponent format. The encoder 125 may receive a weight value, identify a leading significant bit, and determine a shift amount for the scale portion such that the base portion fits within the available integer bits. In some examples, the encoder 125 may be implemented on-chip to enable training operations or may be performed offline so that encoded weights 114 are loaded into the accelerator 156 for inference.

The computing device 102 may receive the weights 114 in the integer-exponent format 120 and store the weights 114 in a memory device 112 of the computing device 102.

The weights 114 may be generated during a training phase performed on a separate system or on a server computer (e.g., the cloud) and then quantized or encoded into the integer-exponent format 120 for inference execution on the computing device 102. In some examples, the weights 114 may be encoded offline and transferred to the computing device 102 via a wired or wireless connection or loaded from local non-volatile memory. Once received, the weights 114 may be stored in the memory device 112 using a compact encoding that preserves both the first portion 121 and second portion 123. In some examples, the memory device 112 includes separate storage regions for the weights 114 and for corresponding input values 135a, bias values, and output values 136a. The stored weights 114 may be accessed by the accelerator 156 and decoded into an effective scaled value for use during inference operations performed by the neural network 106.

As shown in FIG. 1A, the accelerator 156 includes a scaled multiply circuit 150 configured to receive a weight 114 of a neural network 106 and an input value 235a. The weight 114 has been encoded in the integer-exponent format 120. The weight 114 includes a sequence of bits, where each bit includes a bit value. An eight-bit weight includes bit 0, bit 1, bit 2, bit 3, bit 4, bit 5, bit 6, and bit 7. The scaled multiply circuit 150 includes a multiplier 108 and a scaled generator 122. The scaled generator 122 may include one or more components that operate in conjunction with the multiplier 108 to generate a scaled multiplication result 146 based on the weight 114 in the integer-exponent format 120. The scaled multiplication result 146 may have a dynamic range that is larger than the N-bit weight. For example, if the weight 114 is an eight-bit weight, and the weight 114 in the integer-exponent format 120 may have twelve bits of range.

Using the weight 114, the scaled multiply circuit 150 may identify the first portion 121 of the weight 114 and the second portion 123 of the weight 114. The first portion 121 may be a first subset of bits associated with the weight 114. In some examples, the first portion 121 is referred to as a base portion. In some examples, the first portion 121 is referred to as a mantissa portion. The second portion 123 may be a second subset of bits associated with the weight 114. In some examples, the first portion 121 and the second portion 123 are non-overlapping subsets of bits. In some examples, the second portion 123 is referred to as a scale portion. In some examples, the second portion 123 is referred to as an exponent portion. The first portion 121 may represent a signed integer value encoded using two's complement. In some examples, the first portion 121 includes an implied most significant bit that may be restored using decoder logic. In some examples, decoder logic may also invert or modify one or more bits of the first portion 121 in response to the value of the second portion 123. The second portion 123 may represent a shift value that determines how the result of the multiplication will be scaled. The number of bits allocated to the first portion 121 and second portion 123 may vary depending on the format variant.

The multiplier 108 generates a multiplication result 144 by multiplying an input value 135a with the first portion 121 of the weight 114. The input value 135a includes a sequence of bits and may represent fixed-point input data. In some examples, the bit width of the input value 135a is greater than the bit width of the weight 114. For example, the input value 135a may be a 16-bit or 8-bit input. In some examples, the input value 135a is a fixed point input. Prior to multiplication, the first portion 121 may be sign-extended or normalized, depending on the encoding. The multiplication result 144 may be a signed value.

The scaled generator 122 generates a scaled multiplication result 146 based on the multiplication result 144 and the second portion 123. This may enable higher dynamic range for the weight 114 while using smaller bit widths and simpler hardware. In some examples, the scaled generator 122 includes a shifter configured to perform a shift operation (e.g., a left shift) on the multiplication result 144 according to a shift value represented by the second portion 123. The shift may be linear (e.g., shift by 0 to 7), double (e.g., shift by 0, 2, 4, 6), or triple (e.g., shift by 0, 3, 6, 9), depending on the format. The shift operation increases the effective value of the product, enabling a greater dynamic range without the need for floating-point multiplication. The shift may be implemented using a variable shifter or a multi-level fixed shifter. The output of the shifter may be used as an input to an accumulator or may be processed by additional components such as a saturation unit, rounding logic, or activation function. In some examples, the integer-exponent format 120 enables efficient and scalable multiplication while maintaining compatibility with integer arithmetic pipelines. Additional embodiments may include dual-mode architectures configured to support both integer-exponent weights and conventional fixed-point weights, as well as decoder configurations that support optional implied MSB restoration, conditional inversion, or format-specific shift behaviors.

The accelerator 156 may include a plurality of scaled multiply circuits 150 configured to execute concurrently (e.g., at least partially in parallel) for transforming a set of input values 235a using a set of weights 114. In some examples, the scaled multiply circuits 150 are arranged to perform multiple multiply-and-scale operations in parallel during a single clock cycle. Each scaled multiply circuit 150 may receive a different weight 114 while sharing a common input value 235a, or each may receive different input values 235a and weights 114, depending on the execution configuration. In some examples, the accelerator 156 includes four, eight, or sixteen scaled multiply circuits 150 operating in parallel, thereby enabling high-throughput processing of neural network layers. Each scaled multiply circuit 150 may generate a corresponding scaled multiplication result 146 that is independently accumulated or forwarded to downstream processing units. The parallel configuration allows efficient processing of vector-matrix operations typical in neural network inference while reducing overall latency and power consumption. In some examples, the number of scaled multiply circuits 150 may be configurable or programmable, enabling adaptation to different model sizes or hardware constraints.

In some examples, the accelerator 156 is configured to support multiple operational modes for processing weights 114. In some examples, the accelerator 156 (e.g., a scaled multiply circuit 150) receives a mode signal that indicates an encoding scheme of the weights 114. The encoding scheme may be an integer format, a fixed-point format, a floating point format, or one of different types of the integer-exponent format 120. For example, the accelerator 156 may include dual-mode or multi-mode circuitry configured to switch between an integer format and an integer-exponent format 120 and/or between a first integer-exponent format and a second integer-exponent format 120 within a single hardware design. For example, the accelerator 156 may include one or more multiplexers that selectively route a weight 114 to a direct integer multiplication path or to an integer-exponent shifting path, or, in some examples, a decoding and shifting path. This configuration allows the accelerator 156 to adapt to different encoding formats without redesigning the multiplier and shifter hardware.

In a first mode, the accelerator 156 may process weights 114 represented in an integer format (e.g., two's complement integers without an exponent portion). In a second mode, the accelerator 156 processes weights 114 represented in an integer-exponent format 120, where each weight 114 includes a base portion and a scale portion. In further modes, the accelerator 156 supports different integer-exponent formats 120 having different allocations of bits between the base portion and the scale portion. For example, the accelerator 156 may support formats having two exponent bits (e.g., double-shift format), three exponent bits (e.g., triple-shift format), or other exponent widths.

In some examples, the accelerator 156 may include a mode selector that enables switching between these formats at runtime. In some examples, the mode selector includes one or more control registers configured by a processor, state machine, or firmware. In some examples, a multiplexer arrangement selectively routes the base portion and scale portion of a weight to corresponding decoding logic, multiplier logic, and/or shifter logic depending on the selected mode. In some examples, a dual-mode or multi-mode scaled multiply circuit includes both a shifter stage and optional implied-MSB decoding logic, with the active path determined by the selected mode.

In some examples, in response to the mode signal, the accelerator 156 may activate or configure a corresponding logic path to correctly interpret the weight 114. For example, when the mode signal indicates an integer format, the logic path may bypass exponent-related circuitry and supply the weight value to the multiplier. When the mode signal indicates an integer-exponent format, the logic path may route a subset of bits to a base-portion path and another subset of bits to a scale-portion path, such as by enabling a multiplexer, decoder, or other steering logic. The base-portion path may include sign-extension or implied-MSB restoration logic, while the scale-portion path may control a variable shifter to apply a scaling operation. In further examples, the logic path selected by the mode signal may configure the accelerator to handle different integer-exponent formats. For instance, the logic path may decode two exponent bits to implement a double-shift scheme, or three exponent bits to implement a triple-shift scheme. The selection of the logic path therefore allows the accelerator to interpret weights according to multiple encoding schemes and ensures that the correct combination of base and scale portions is identified before multiplication and shifting.

Accordingly, the accelerator 156 may be configurable to process integer weights, integer-exponent weights having a single exponent bit, integer-exponent weights having two exponent bits, integer-exponent weights having three exponent bits, and/or other integer-exponent variations. This flexibility may allow an accelerator design (e.g., a single accelerator design) to be reused across different neural network models with different precision and dynamic-range requirements.

In some examples, the accelerator 156 includes a multiplier configured to multiply an input value 135a by a base portion (e.g., a first portion 121) of a weight 114, a shifter configured to shift a multiplication result 144 according to a scale portion (e.g., a second portion 123) of the weight 114, and a mode selector configured to control operation of the multiplier and the shifter. The mode selector may be configurable to operate in a first mode in which the weight 114 is represented in an integer format without the scale portion, and to operate in a second mode in which the weight 114 is represented in an integer-exponent format 120 including the base portion and the scale portion. In further examples, the mode selector is configurable to switch between different integer-exponent formats having different allocations of bits between the base portion and the scale portion. The mode selector may be implemented using control registers, a state machine, multiplexing circuitry, or other programmable logic, and may be dynamically programmed by a processor or firmware at runtime to adapt to different neural network models.

While some examples describe the integer-exponent format 120 with respect to neural network weights, the same format may be applied to bias values. In some examples, the accelerator 156 includes a bias fetcher configured to retrieve bias values stored in the integer-exponent format 120. The bias fetcher may include decoding logic similar to the decoder used for weights 114, and the bias values may be shifted in accordance with the associated scale portion. In some examples, the integer-exponent format is used for weight values and bias values.

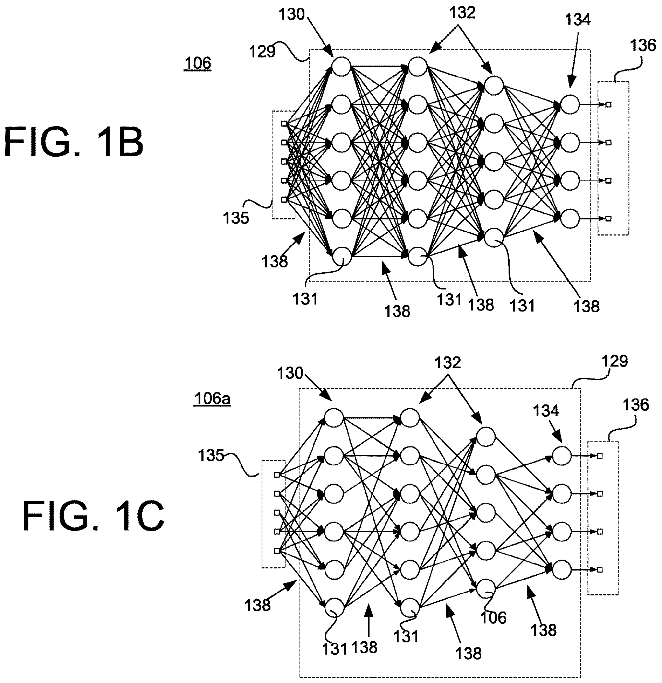

Referring to FIGS. 1B and 1C, the neural network 106 includes a set of computational processes for receiving input data 135 (e.g., input values 135a) and generating output data 136 (e.g., output values 136a). In some examples, each output value 136a of the output data 136 may represent a speech command and the input data 135 may represent speech (e.g., audio data in the frequency domain). However, it is noted that the neural network system 100 is not limited to processing audio data, where the neural network system 100 can be applied to any type of system. The neural network 106 includes a plurality of layers 129, where each layer 129 includes a plurality of neurons 131. The plurality of layers 129 may include an input layer 130, one or more hidden layers 132, and an output layer 134. In some examples, in the case of audio processing, each output value 136a of the output layer 134 represents a possible recognition (e.g., machine recognition of speech commands or image identification). In some examples, the output data 136 of the output layer 134 with the highest value represents the recognition that is most likely to correspond to the input data 135.

In some examples, the neural network 106 is a deep neural network (DNN). For example, a deep neural network (DNN) may have one or more hidden layers 132 disposed between the input layer 130 and the output layer 134. However, the neural network 106 may be any type of artificial neural network (ANN) including a convolution neural network (CNN). The neurons 131 in one layer 129 are connected to the neurons 131 in another layer via synapses 138. For example, each arrow in FIG. 1B may represent a separate synapse 138. Fully connected layers 129 (such as shown in FIG. 1B) connect every neuron 131 in one layer 129 to every neuron in the adjacent layer 129 via the synapses 138.

Each synapse 138 is associated with a weight 114. A weight 114 is a parameter within the neural network 106 that transforms the input data 135 within the hidden layers 132. As an input value 135a enters the neuron 131, the input value 135a is multiplied by a weight 114 and the resulting output is either observed or passed to the next layer in the neural network 106. For example, each neuron 131 has a value corresponding to the neuron's activity (e.g., activation value). The activation value can be, for example, a value between 0 and 1 or a value between -1 and +1. The value for each neuron 131 is determined by the collection of synapses 138 that couple each neuron 131 to other neurons 131 in a previous layer 129. The value for a given neuron 131 is related to an accumulated, weighted sum of all neurons 131 in a previous layer 129. In other words, the value of each neuron 131 in a first layer 129 is multiplied by a corresponding weight 114 and these values are summed together to compute the activation value of a neuron 131 in a second layer 129. Additionally, a bias may be added to the sum to adjust an overall activity of a neuron 131. Further, the sum including the bias may be applied to an activation function, which maps the sum to a range (e.g., zero to 1). Possible activation functions may include (but are not limited to) rectified linear unit (ReLu), sigmoid, or hyperbolic tangent (TanH).

In some examples, as shown in FIG. 1C, the neural network 106 is not fully connected, where every neuron 131 in one layer 129 is not connected to every neuron in the adjacent layer 129 via the synapses 138. If a synapse 138 is associated with a pruned weight, that synapse 138 (and consequently the corresponding weight) may be considered pruned or removed from the neural network 106, thereby producing a sparse neural network 106a as shown in FIG. 1C. A sparse neural network 106a may be a partially connected (or irregular) neural network 106.

In some examples, the computing device 102 is a speech recognition device. In some examples, the computing device 102 is a hearing aid device. The neural network circuit 104 is configured to receive an audio input and determine an audio speech command based on the audio input. In some examples, the computing device 102 utilizes the neural network 106 to improve recognition of commands spoken by a user. Based on a recognized command (e.g., volume up), the computing device 102 may perform a function (e.g., increase volume). Additionally, or alternatively, the computing device 102 may utilize the neural network 106 to improve recognition of a background environment. Based on a recognized environment, the computing device 102 may (automatically) perform a function (e.g., change a noise cancellation setting). The use of the accelerator 156 may decrease a power consumption required for computing the neural network 106, which may be required frequently for speech recognition scenarios described. The reduced power may be advantageous for relatively small devices with relatively low power consumption (e.g., hearing aids).

In some examples, the computing device 102 using the neural network 106 and the accelerator 156 may improve speech recognition (e.g., voice commands) or sound recognition (e.g., background noise types) in a power efficient way (e.g., to conserve battery life). In some examples, the accelerator 156 is a semiconductor (i.e., hardware) platform (i.e., block) that aids a processor in implementing the neural network 106. The accelerator 156 includes hard coded logic and mathematical functions that can be controlled (e.g., by a state machine configured by a processor) to process the neural network 106. In some examples, the accelerator 156 can process the neural network 106 faster and more (power) efficiently than conventional software running on, for example, a digital signal processor (DSP). A DSP approach may require additional processing/power resources to fetch software instructions, perform computations in series, and perform computations using a bit depth that is much higher than may be desirable for a particular application. Instead, in some examples, the accelerator 156 avoids fetching software instructions, performs processing (e.g., computations) in parallel, and processes using a bit depth for a neural network 106 suitable for a particular application.

In some examples, the neural network 106 is a representation of a model rather than a physical structure on the integrated circuit. The neural network 106 may be characterized by a plurality of weights 114, bias values, and other learned parameters that define how input values 135a are transformed into output values 136a. These values are stored in memory and interpreted by hardware logic of the accelerator 156, but the neural network 106 itself is not hardwired into the chip. Instead, the accelerator 156 provides a configurable execution engine that applies stored weight values, bias values, and related information to input data, thereby implementing the functionality of the neural network model during inference or training.

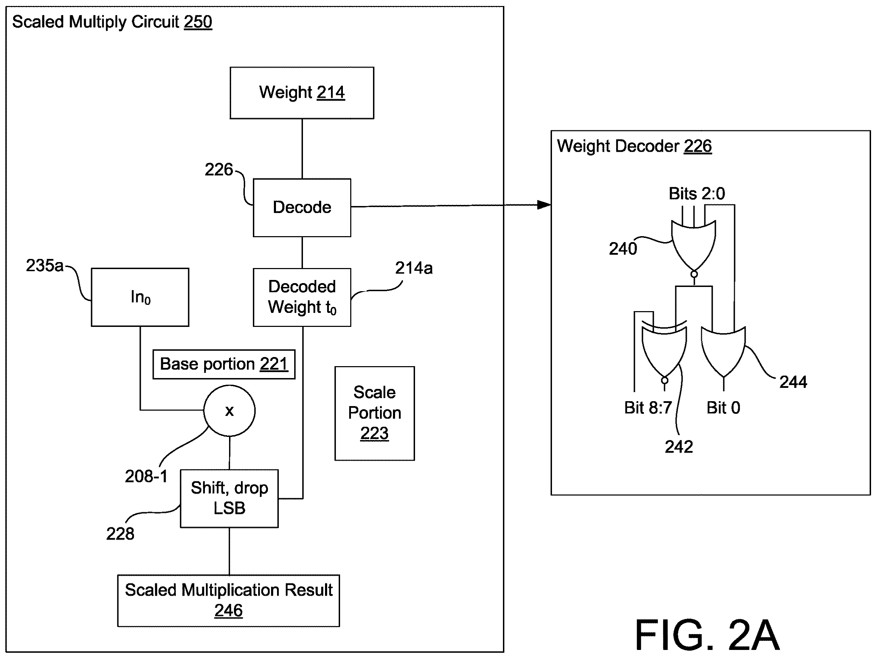

FIG. 2A illustrates an example of a scaled multiply circuit 250 according to an aspect. In some examples, the scaled multiply circuit 250 applies a shift with an implied most significant bit. The scaled multiply circuit 250 performs a multiplication operation using an input value 235a and a weight 214 that was encoded with the integer-exponent format. The scaled multiply circuit 250 can process weights 214 with a larger dynamic range than conventional integer-only representations while maintaining integer-like hardware power consumption. In some examples, the scaled multiply circuit 250 may allow the use of smaller integer multipliers (e.g., 16x6 bit multipliers), followed by a shifter (e.g., the shifter 228), thereby reducing gate count, power consumption, die area, and/or leakage as compared to some full floating-point implementations.

The scaled multiply circuit 250 includes components for decoding the weight 214, generating a multiplication result based on an input value 235a and a base portion 221, and applying a shift operation based on a scale portion 223. The scaled multiply circuit 250 may enable efficient computation of scaled multiplication results with low power and gate count while supporting compact weight encoding.

In some examples, the weight 214 includes an 8-bit integer format (e.g., an 8-bit two's complement integer format) having bit 0, bit 1, bit 2, bit 3, bit 4, bit 5, bit 6, and bit 7. In some examples, the 8-bit integer format includes a two's complement integer format. In some examples, with respect to the weight 214, bit 0 is the least significant bit, and bit 7 is the most significant bit. It is noted that the scaled multiply circuit 250 is not limited to an 8-bit integer format, where the scaled multiply circuit 250 can process weights 214 with any number of bits such as 4-bit, 16-bit, 32-bit, or other types of integer bit formats. In some examples, the scaled multiply circuit 250 converts an 8-bit integer weight into a weight with twelve bits of range.

The scaled multiply circuit 250 includes a decoder 226 configured to receive a weight 214 and generate a decoded weight 214a. In some examples, the decoded weight 214a has a number of bits that is greater than the weight 214. In some examples, the decoder 226 adds a bit to the weight 214 and changes at least one bit of the weight 214. In some examples, if the weight 214 is eight-bits (e.g., bit 0 to bit 7), the decoded weight 214a is nine-bits (e.g., bit 0 to bit 8). In some examples, the decoder 226 determines an implied most significant bit (e.g., bit 8) for the decoded weight 214a, includes the same bits for bits 1 to 7, and adjusts the least significant bit (e.g., bit 0).

The decoder 226 may include a logic gate 240, a logic gate 242, and a logic gate 244. In some examples, the logic gate 240 includes a NOR gate. In some examples, the logic gate 242 includes a NOR gate. In some examples, the logic gate 244 includes an OR gate. The logic gate 240 is configured to receive a subset of the bits of the weight 214. If the weight 214 has an 8-bit format, in some examples, the logic gate 240 receives three bits (e.g., bit 0, bit 1, and bit 2) of the weight. In some examples, the logic gate 240 receives the three least significant bits. In some examples, the logic gate 240 may include a first input to receive a first bit (e.g., bit 0) of the weight 214, a second input to receive a second bit (e.g., bit 1) of the weight 214, and a third input to receive a third bit (e.g., bit 2) of the weight 214.

The logic gate 242 includes a first input configured to receive a bit (e.g., bit 7) of the weight 214. In some examples, the first input of the logic gate 242 receives the most significant bit (e.g., bit 7) of the weight 214. The logic gate 242 includes a second input connected to an output of the logic gate 240. Using the most significant bit and the output of the logic gate 240, the logic gate 242 generates an output, where the output includes an additional bit not included in the weight 214. The additional bit may be the inferred most significant bit (e.g., bit 8) for the decoded weight 214a.

The scaled multiply circuit 250 includes a multiplier 208-1 that receives a base portion 221 of the decoded weight 214a. The base portion 221 may be an example of the first portion 121 of FIG. 1A. The multiplier 208-1 multiplies an input value 235a (e.g., a multi-bit value such as a 16-bit input value) by the base portion 221. In some examples, the base portion 221 is referred to as a mantissa portion. In some examples, the base portion 221 is referred to as a two's complement integer value. The base portion 221 may be a first subset of the bits of the decoded weight 214a. In some examples, the base portion 221 includes a number (e.g., six bits) of the most significant bits of the decoded weight 214a. In some examples, the base portion 221 includes six bits (e.g., 6 of 9), e.g., bit 0, bit 1, bit 2, bit 3, bit 4, and bit 5.

The other bits (e.g., a second subset) of the decoded weight 214a may represent a scale portion 223. The scale portion 223 may include a subset of bits of the decoded weight 214a. In some examples, the scale portion 223 is referred to as a shift value. In some examples, the scale portion 223 is referred to as an exponent portion. In some examples, the scale portion 223 may be represented by a number (e.g., three bits) of the least significant bits of the decoded weight 214a. In some examples, the scale portion 223 may be represented by bit 0, bit 1, and bit 2 of the decoded weight 214a.

The scaled multiply circuit 250 includes a shifter 228 connected to an output of the multiplier 208-1. In some examples, the shifter 228 includes a three-level shifter. In some examples, the shifter 228 is configured to receive the scale portion 223 as a control signal to control the amount of shifting performed by the shifter 228. For example, the shifter 228 executes a shift operation on the multiplication results of the multiplier 208-1 based on the scale portion 223. In some examples, after the shift operation, the shifter 228 discards (e.g., drops) the least significant bit from the multiplication results. In some examples, discarding the least significant bit may maintain the desired output precision with the expanded range. The output of the shifter 228 generates the scaled multiplication result 246.

In some examples, the decoder 226 may be implemented using alternative logic arrangements depending on the format of the weight 214. For example, the decoder 226 may restore an implied MSB based on a subset of the scale portion 223 or may bypass bit inversion entirely for formats that do not require conditional correction. In some examples, the decoder 226 may support multiple operating modes to decode different weight formats, such as single-shift formats with implied MSB or double-shift formats without implied MSB. In some examples, the decoder 226 is implemented as a combinational logic block configured to output a decoded weight 214a within a single clock cycle.

The scaled multiplication result 246 may be provided to one or more downstream processing components, such as an accumulator, rounding unit, activation function block, or output register. In some examples, the scaled multiply circuit 250 forms part of a larger parallel array of arithmetic units, enabling efficient implementation of multiply-accumulate operations in a neural network accelerator 156.

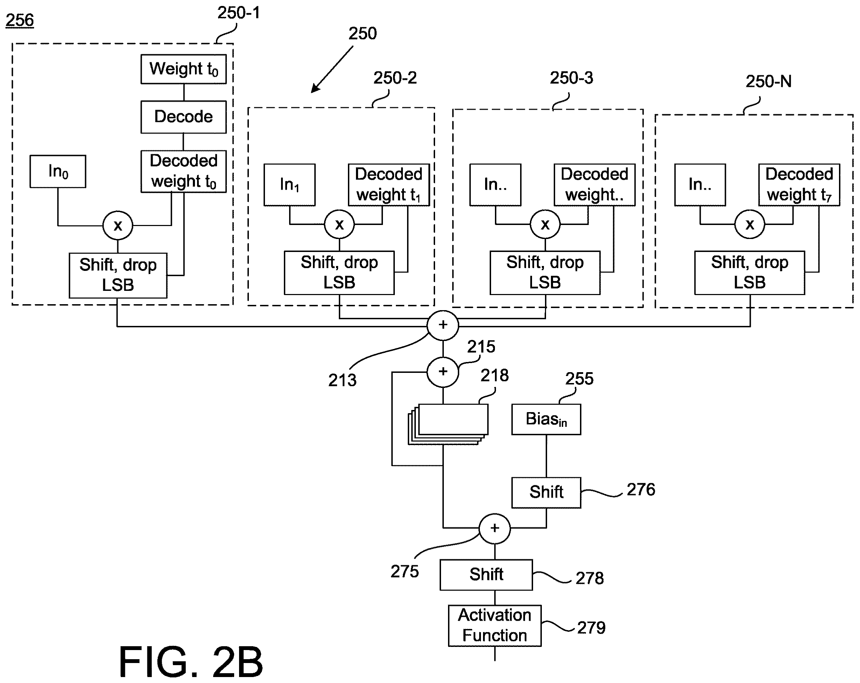

FIG. 2B illustrates an accelerator 256 with a plurality of scaled multiply circuits 250. The accelerator 256 may be configured to perform multiply-accumulate operations for a neural network. The scaled multiply circuits 250 include a scaled multiply circuit 250-1, a scaled multiply circuit 250-2, and a scaled multiply circuit 250-3 to a scaled multiply circuit 250-N, where N may be integer greater or equal to four. In some examples, the value of N may be fixed (e.g., 4, 8, or 16) or programmable based on model configuration or hardware constraints. The scaled multiply circuits 250 may be configured to execute in parallel with each other. Each scaled multiply circuit 250 of FIG. 2B may be the scaled multiply circuit 250 of FIG. 2A, where each scaled multiply circuit 250 may process a different weight 214 to generate a separate output (e.g., scaled multiplication result).

In some examples, each scaled multiply circuit 250 receives a different weight 214 and shares a common input value 235a. This may allow each scaled multiply circuit 250 to compute the contribution of the same input to a different output neuron in parallel.

The accelerator 256 may include an arrangement of adders (e.g., an adder tree) configured to sum the outputs of the plurality of scaled multiply circuits 250. In some examples, a first adder 213 is configured to sum the outputs of the scaled multiply circuit 250-1 and the scaled multiply circuit 250-2, and a second adder 215 is configured to sum the output of the first adder 213 with the outputs of other scaled multiply circuits (e.g., scaled multiply circuit 250-3 to scaled multiply circuit 250-N, or results from other adder stages). The output of the adders is provided to an accumulator 218. The accumulator 218 is configured to store the summed results. In some examples, the adders are arranged hierarchically to reduce the latency of summation operations. The depth and structure of the adder tree may vary depending on the number of scaled multiply circuits 250.

The accelerator 256 may retrieve a bias value 255. The bias value 255 may be an 8-bit, 16-bit, or 32-bit value but may encompass any type of bit value. The bias value 255 may also be a compressed 8-bit value. The accelerator 256 may include a bias shifter 276 configured to receive the bias value 255 and perform a shift operation, outputting a shifted bias value. In some examples, the bias values 255 can be encoded using the integer-exponent format 120 of FIGS. 1A and 1C. In some examples, the bias shifter 276 may use a scale portion of the bias value 255 to shift the bias value 255. The shifted bias value from the bias shifter 276 is then added to the accumulated result from the accumulator 218 by an adder 275. In some examples, the bias value 255 may be omitted, zeroed, or reused across multiple output channels, depending on the model configuration.

The output of adder 275 is then provided to a shifter 278. The shifter 278 is configured to perform a shift operation on the sum of the accumulated result and the bias value 255. In some examples, the shifter 278 performs right-shift scaling or fixed-point normalization prior to applying the activation function. The shifter 278 may also perform truncation or rounding depending on output precision requirements. The output of the shifter 278 is then provided to an activation function block 279. The activation function block 279 applies a non-linear activation function to the processed data. The activation function block 279 may apply a non-linear function such as ReLU, leaky ReLU, sigmoid, or tanh. In some examples, the activation function may bypass rounding and saturation to preserve precision (e.g., sigmoid and tanh modes). The output of the activation function block 279 may be, for example, an 8-bit, 16-bit, or 32-bit value, and may also be a compressed 8-bit value.

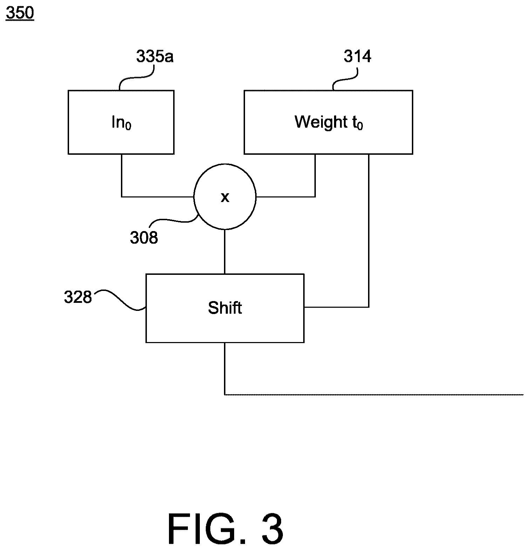

FIG. 3 illustrates an example of a scaled multiply circuit 350 according to an aspect. In some examples, the scaled multiply circuit 350 applies a double shift without an implied most significant bit. The scaled multiply circuit 350 performs a multiplication operation using an input value 335a and a weight 314 that was encoded with the integer-exponent format. The scaled multiply circuit 350 can process weights 314 with a larger dynamic range than conventional integer-only representations while maintaining integer-like hardware power consumption. In some examples, the scaled multiply circuit 350 may allow the use of smaller integer multipliers, followed by a shifter (e.g., the shifter 328), thereby reducing gate count, power consumption, die area, and/or leakage as compared to some full floating-point implementations. The scaled multiply circuit 350 is configured to operate on weights 314 encoded in a format that does not include an implied most significant bit. In some examples, the format corresponds to a double-shift format in which the scale portion indicates a shift amount of 0, 2, 4, or 6 bits.

In some examples, the scaled multiply circuit 350 does not determine or use an implied most significant bit. The scaled multiply circuit 350 may receive a weight 314 (e.g., weight 0) and an input value 335a. In some examples, the weight 314 includes an 8-bit integer format (e.g., an 8-bit two's complement integer format) having bit 0, bit 1, bit 2, bit 3, bit 4, bit 5, bit 6, and bit 7. In some examples, the 8-bit integer format includes a two's complement integer format. In some examples, with respect to the weight 314, bit 0 is the least significant bit, and bit 7 is the most significant bit. It is noted that the scaled multiply circuit 350 is not limited to an 8-bit integer format, where the scaled multiply circuit 350 can process weights 314 with any number of bits such as 4-bit, 16-bit, 32-bit, or other types of integer bit formats. In some examples, in response to the weight 314 being in the integer-exponent format, the scaled multiply circuit 350 converts an 8-bit integer weight into an expanded weight with twelve bits of range.

The weight 314 includes a base portion and a scale portion. The base portion may be a 6-bit two's complement integer value representing the primary magnitude of the weight 314. In some examples, the base portion includes bits 2 through 7 of the weight 314. The scale portion may be a 2-bit unsigned integer representing a shift value and may include bits 0 and 1 of the weight 314. The base portion may be an example of the first portion 121 of the weight 114 of FIG. 1A, and the scale portion may be an example of the second portion 123 of the weight 114 of FIG. 1A. In some examples, the base portion is referred to as a mantissa portion, and the scale portion is referred to as a shift or exponent portion.

The scaled multiply circuit 350 includes a multiplier 308 and a shifter 328. The multiplier 308 receives an input value 335a and multiplies the input value 335a by the base portion of the weight 314 to produce a multiplication result. The shifter 328 receives the multiplication result and performs a shift operation based on the scale portion of the weight 314. In some examples, the scale portion encodes a 2-bit shift value corresponding to a left shift by 0, 2, 4, or 6 positions. This double-shift format provides exponentially increasing scaling factors (e.g., ×1, ×4, ×16, ×64) using a compact encoding and avoids the need for fine-grained shifting logic. The bits of the weight 314 are parsed directly without reconstruction or implied-bit restoration, enabling reduced decoder complexity and consistent timing behavior.

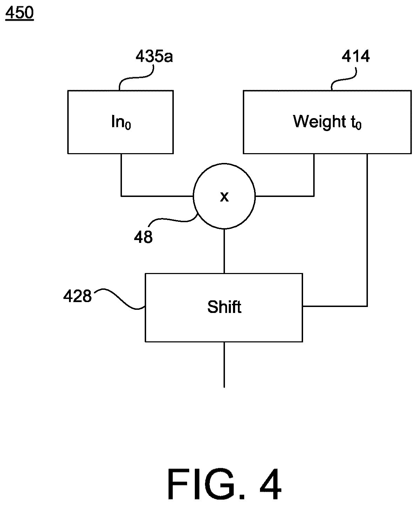

FIG. 4 illustrates an example of a scaled multiply circuit 450 according to an aspect. The scaled multiply circuit 450 performs a multiplication operation using an input value 435a and a weight 414 that was encoded with the integer-exponent format. The scaled multiply circuit 450 can process weights 414 with a larger dynamic range than conventional integer-only representations while maintaining integer-like hardware power consumption. In some examples, the scaled multiply circuit 450 may allow the use of smaller integer multipliers, followed by a shifter (e.g., the shifter 428), thereby reducing gate count, power consumption, die area, and/or leakage as compared to some full floating-point implementations.

The scaled multiply circuit 450 includes hardware logic that uses a triple-shift encoding scheme without an implied most significant bit. The triple shift format provides expanded dynamic range using coarse-grained scaling steps, which may reduce sensitivity to quantization noise and simplify exponent control logic. In some examples, the scaled multiply circuit 450 may be implemented using the same base hardware as other embodiments, with the shift logic configured to apply different shift increments (e.g., 1, 2, or 3 bits per scale unit). The bits of the weight 414 are parsed directly without implied-bit restoration or conditional decoding logic.

The scaled multiply circuit 450 includes a multiplier 408 and a shifter 428. The scaled multiply circuit 450 selects a subset of bits from the weight 414 as the base portion and selects a subset of bits from the weight 414 as the scale portion. The multiplier 408 multiplies the input value 435a by the base portion, and the shifter 428 executes a shift operation on the multiplication result using the scale portion. In some examples, the scale portion is referred to as a shift value or a 2-bit shift value. In some examples, the shift value represents triple shifts, such that the shifter 428 performs a shift by 0, 3, 6, or 9 positions to the left. This may allow the scaled multiply circuit 450 to efficiently process weights with a larger dynamic range.

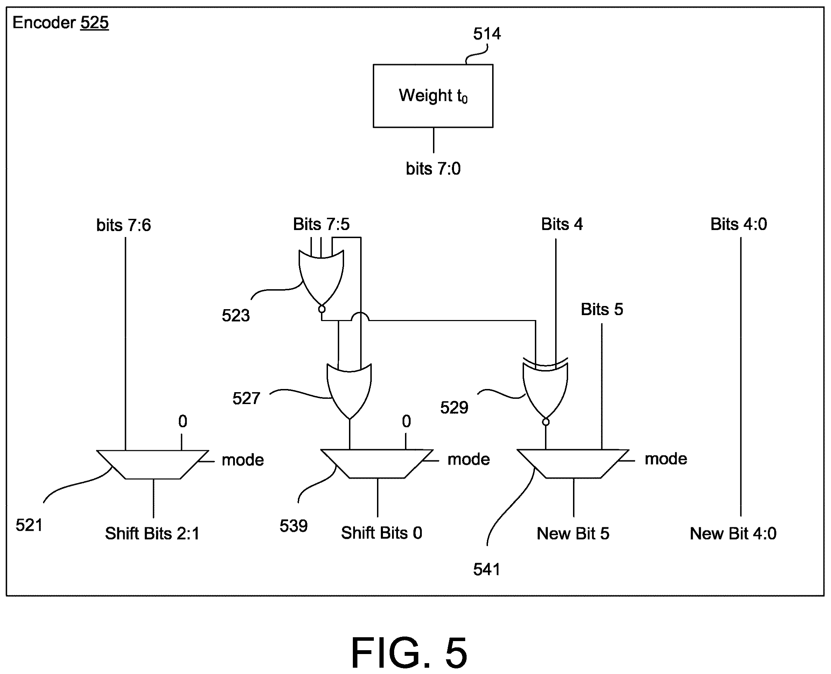

FIG. 5 illustrates an encoder 525 configured to encode weights 114 of the neural network 106 in an integer-exponent format. The encoder 525 is configured to receive a weight 514 (e.g., weight t0). In some examples, the weight 514 includes eight-bits (e.g., bits 7:0). However, the weight 514 may include other formats such as four-bits, six-bits, twelve-bits, sixteen-bits. The encoder 525 may interpret or process the weight 514 based on a selected operational mode. The selected operational mode may be selected from a plurality of modes such as a first mode corresponding to an N-bit mode (e.g. an eight-bit mode) or a second mode corresponding to an M-bit mode (e.g., a twelve-bit mode). The encoder 525 generates output signals. The output signals include a first signal representing shift bits (e.g., shift bits 2:1, shift bit 0). In some examples, the shift bits are referred to as scale bits. The shift bits may be an example of the second portion 123 of FIG. 1A. The output signal includes a second representing new base bits (e.g., new bit 5 [541], new bits 4:0). The base bits may be an example of the first portion 121 of FIG. 1A. In some examples, the base bits are referred to as mantissa bits. The shift bits and the base bits may represent the components of the weight 114.

The encoder 525 enables flexible transformation of weights 514 into integer-exponent format representations that are compatible with one or more scaled multiply circuits, such as those described herein. The encoder 525 supports configurable precision modes, allowing dynamic range scaling or fixed-width operation depending on application requirements.

In some examples, the output signals generated by the encoder 525 preserve the total bit width of the input weight 514, such that the number of bits in the combined base and shift portions equals the number of bits in the weight 514. In other examples, the encoding process may expand the bit width to accommodate an implied bit or derived shift value, depending on the selected operational mode. In contrast to decoder circuits such as the decoder 226 of FIG. 2A, which extracts base and shift portions from a pre-encoded weight, the encoder 525 performs an initial transformation to encode a raw weight 514 into the integer-exponent format.

The encoder 525 includes a plurality of multiplexers. The multiplexers include a multiplexer 521, a multiplexer 539, and a multiplexer 529. Each of the multiplexer 521, the multiplexer 539, and the multiplexer 529 is controlled by a mode signal. The mode signal enables the encoder 525 to support different encoding schemes for the weight 514, such as a first mode (e.g., an N-bit mode) (e.g., eight-bit mode) or second mode (e.g., an M-bit mode) (e.g., a twelve-bit mode). The mode signal may be provided by a control register, software instruction, or configuration state machine, allowing the encoder 525 to be dynamically controlled by a compiler, runtime controller, or training engine.

In the first mode, the encoder 525 is configured to interpret the weight 514 as a standard N-bit integer value. Although the following description uses an eight-bit mode, the encoder 525 may be used for other encoding schemes. The multiplexer 521 receives a portion of bits (e.g., bits 7:6) of the weight 514 at a first input and a value (e.g., a zero value) at a second input. The multiplexer 521 routes the value (e.g., the zero value) to output shift bits (e.g., output shift bits 2:1) in response to the operational mode being in the first mode. The multiplexer 539 receives an output from a logic gate 527 at a first input and a value (e.g., a zero value) at a second input. The multiplexer 539 routes the value (e.g., the zero value) to an output shift bit (e.g., output shift bit 0) in response to the operational mode being in the first mode. In some examples, this may ensure the shift bits are effectively set to zero.

The multiplexer 541 receives a bit (e.g., bit 5) from the weight 514 at a first input and an output from a logic gate 523 at a second input. The multiplexer 541 routes a bit (e.g., bit 5) to output new bit (e.g., output new bit 5) in response to the operational mode being in the first mode. The output new bits (e.g., output new bits 4:0) receives bits (e.g., bits 4:0) of the weight 514. This configuration may ensure that some of the bits (e.g., bits 5:0) of the original weight 514 remain effectively unchanged, and no shifting is implied for the resulting value.

In the second mode, the encoder 525 is configured to extract components corresponding to the integer-exponent format with a larger dynamic range, such as a format with a M-bit of range. The parameter M may be larger than the parameter N. In the second mode, the multiplexer 521 routes bits (e.g., bits 7:6) of the weight 514 to output shift bits (e.g., output shift bits 2:1). A logic gate 523 (e.g., a NOR gate) receives some bits (e.g., bit 4, bit 5) from the weight 514. The output of the logic gate 523 is provided to a logic gate 527 (e.g., an XOR gate). The logic gate 527 receives a bit (e.g., bit 7) from the weight 514 and the output of the logic gate 523. The output of the logic gate 527 is then routed via the multiplexer 539 to an output shift bit (e.g., output shift bit 0). The shift bits (e.g., shift bits 2:1 and shift bit 0) collectively form an exponent portion (also referred to as a scale portion or the second portion 123 of FIG. 1A) of the encoded weight 114. For the base portion (e.g., the mantissa portion), new bits (e.g., new bits 4:0) receive bits (e.g., bits 4:0) from the weight 514, while a new bit (e.g., new bit 5) receives the output of the logic gate 523 via the multiplexer 541. The logic gate 523 and the logic gate 527 are specifically configured to perform operations on higher-order bits of the weight 514 to generate the precise values for a shift bit (e.g., the shift bit 0) and a new bit (e.g., new bit 5), which may be consistent with the encoding rules of the M-bit integer-exponent format.

The flexibility provided by the encoder 525 to interpret or process the weight 514 in either a first mode or a second mode allows the associated hardware (e.g., a neural network accelerator) to support different data precision requirements or network types. Such on-chip encoding functionality can be particularly useful for applications involving on-chip neural network training. In some examples, the encoder 525 may support more than two operational modes, such as four-bit, six-bit, or variable-length formats. The logic gates and multiplexers of the encoder 525 may be generalized or expanded to support additional encoding schemes. The shift bits and base bits output from the encoder 525 may be packed into a combined integer-exponent format 120 and stored in a memory (e.g., the memory device 112 of FIG. 1A), provided to a scaled multiply circuit, or transmitted to a neural network processing pipeline.

The encoder 525 may be implemented in a standalone preprocessing block or integrated into a broader neural network processing pipeline. In some examples, the encoder 525 is part of a quantization-aware training flow, where intermediate floating-point weights are converted into integer-exponent format prior to storage or inference execution. In other examples, the encoder 525 may operate at runtime to enable dynamic precision adjustment, compression, or on-the-fly format conversion for low-power or edge applications.

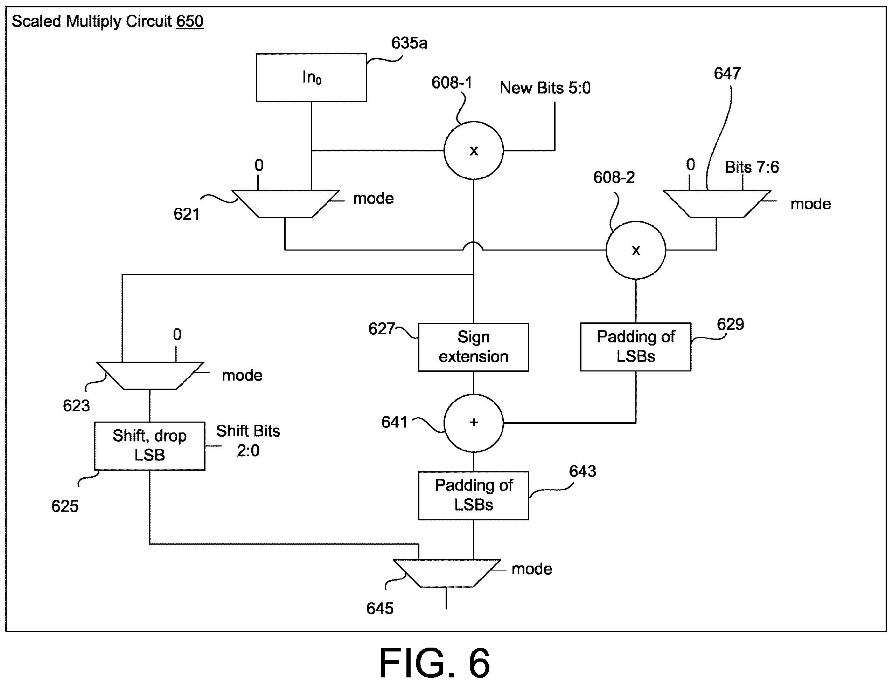

FIG. 6 illustrates a scaled multiply circuit 650 according to another aspect. The scaled multiply circuit 650 is configured to receive an input value 635a and a weight. In some examples, the input value 635a has a Z-bit input value (e.g., a sixteen-bit input value). In some examples, the weight has an N-bit input value (e.g., an eight-bit weight). In some examples, the parameter Z is greater than the parameter N. The scaled multiply circuit 650 is designed to operate in multiple modes, such as a first mode (e.g., an N-bit mode) or a second mode (e.g., an M-bit mode). The use of multiple modes may provide flexible precision while minimizing dynamic power consumption.

The scaled multiply circuit 650 includes a multiplier 608-1 and a multiplier 608-2. The scaled multiply circuit 650 includes an adder 641. The scaled multiply circuit 650 includes a multiplexer 621, a multiplexer 647, a multiplexer 623, and a multiplexer 645, each of which is controlled by a model signal. The scaled multiply circuit 650 includes a shifter 625. The scaled multiply circuit 650 includes a sign extension logic 627. The scaled multiply circuit 650 includes a padding logic 629, and a padding logic 643.

In some examples, the multiplexer 621 receives the input value 635a (e.g., sixteen-bits) at a first input and a zero-value (e.g., sixteen-bits) at a second input. The output of the multiplexer 621 is provided to the multiplier 608-1 and the multiplexer 623. From the weight, the scaled multiply circuit 650 provides a portion of bits (e.g., new bits 5:0) (e.g., 6 bits) to the multiplier 608-1, and a portion of bits (e.g., bits 7:6) (e.g., 2 bits) to the multiplexer 647. The multiplier 608-1 is configured to multiply the input value 635a and the portion of bits (e.g., new bits 5:0), generating a multiplication result, e.g., a Y-bit output (e.g., 22-bit output). The multiplication result is provided to the sign extension logic 627 and the multiplier 608-2.

The multiplier 608-2 multiplies the multiplication result from the multiplier 608-1 by an output (e.g., two-bit value) of the multiplexer 647. The multiplier 608-2 operates as a scale factor amplifier, scaling the result of the base multiplication by a dynamic value derived from the high-order bits of the weight. This mechanism may enable higher effective dynamic range for small base multipliers (e.g., 6-bit), using a second-stage multiplication to adjust magnitude. The output of the multiplier 608-2 (e.g., 24 bits) is provided to the padding logic 629 (e.g., 0 padding of 6 LSBs). The sign extension logic 627 is configured to receive the output of the multiplier 608-1 and perform a sign extension operation (e.g., 2-bit sign extension), producing an output (e.g., a 24-bit output). The sign extension logic 627 may ensure correct sign propagation across the extended bit-width multiplication path, particularly in the second mode where the secondary multiplier 608-2 may be bypassed. This preserves correctness in signed two's complement arithmetic regardless of operational mode.

The adder 641 is configured to sum the output of the sign extension logic 627 and the output of the padding logic 629. The output of the adder 641 (e.g., 24 bits) is provided to the padding logic 643 (e.g., 0 padding of 4 LSBs), which produces an output (e.g., 28-bit output).

The multiplexer 623 receives the output of the multiplexer 621 at a first input and a zero-value (e.g., 28 bits) at a second input, and its output is provided to the shifter 625. The outputs of the padding logic 643 (e.g., 28 bits) and the shifter 625 (e.g., 28 bits) are provided to the multiplexer 645. The multiplexer 645 is configured to select one of these inputs as the output of the scaled multiply circuit 650.

In a first mode (e.g., an N-bit mode), the multiplexer 647 is configured to route bits (e.g., bits 7:6) from the weight to the multiplier 608-2. The multiplier 608-2 thus participates in the multiplication, contributing to the overall result. Furthermore, in the first mode, the shifter 625 and its associated logic (e.g., inputs from the multiplexer 623) are isolated to avoid dynamic power consumption due to toggling of the shifter logic. The final output of the scaled multiply circuit 650 is provided by the multiplexer 645 selecting the output of the padding logic 643.

In a second mode (e.g., an M-bit mode, such as a 12-bit mode), the scaled multiply circuit 650 is configured to support a larger dynamic range. In the second mode, the multiplexer 647 is configured to route a zero-value (e.g., 2 bits) to the multiplier 608-2, effectively isolating its inputs to avoid dynamic power consumption from toggling of the multiplier logic. This may ensure that the multiplier 608-2 does not contribute to the multiplication result in this mode. In the second mode, the input value 635a (e.g., 16-bit) is routed via multiplexer 623 to the shifter 625, which performs a left shift operation according to a shift value derived from the scale portion of the weight (e.g., bits 7:6). The shifted result simulates an exponent scaling operation, consistent with the integer-exponent format, without involving a second multiplication stage. The shifted output of the shifter 625 is provided to the multiplexer 645. The final output of the scaled multiply circuit 650 is provided by the multiplexer 645 selecting the output of the shifter 625. This configuration allows the scaled multiply circuit 650 to adapt between different precision requirements, optimizing power consumption based on the selected mode of operation.

The selection between the first mode and second mode may be controlled via a configuration bit, a control register, or an instruction flag. In some examples, the mode selection is programmable per-layer or per-weight block, allowing layer-specific precision tuning.

The architecture of the scaled multiply circuit 650 enables runtime switching between high-precision and low-power modes without requiring separate hardware data paths. In contrast to fixed-precision accelerators, the dual-mode configuration allows neural network layers to use compressed 8-bit weights for memory-constrained inference or expanded 12-bit formats for accuracy-sensitive computations. The hardware selectively enables or disables computation blocks (e.g., shifter 625 or multiplier 608-2) based on mode selection, optimizing for power, area, and performance.

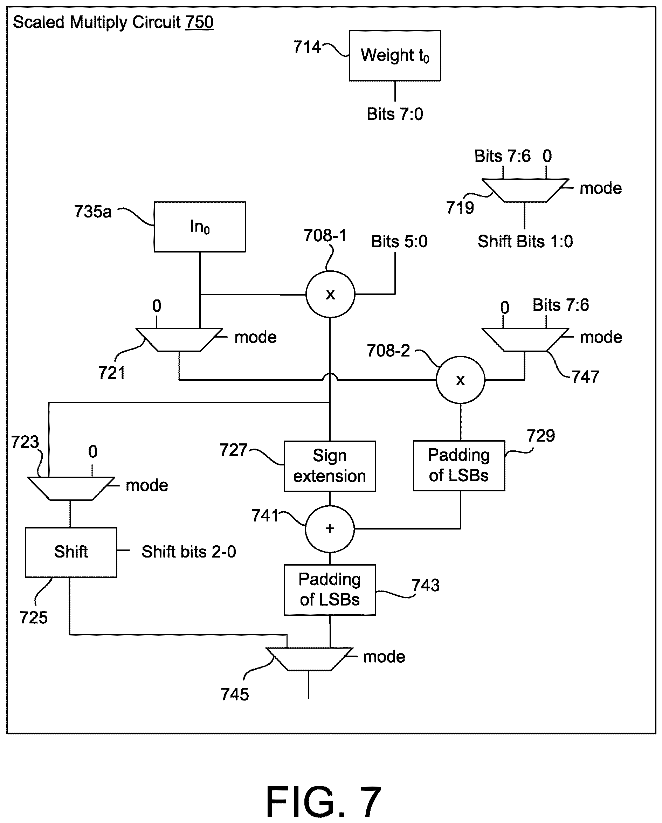

FIG. 7 illustrates a scaled multiply circuit 750 according to another aspect. The scaled multiply circuit 750 is configured to receive an input value 735a and a weight 714. In some examples, the input value 735a has a Z-bit input value (e.g., a sixteen-bit input value). In some examples, the weight 714 has an N-bit input value (e.g., an eight-bit weight). In some examples, the parameter Z is greater than the parameter N. The scaled multiply circuit 750 is designed to operate in multiple modes, such as a first mode (e.g., an N-bit mode) or a second mode (e.g., an M-bit mode). The use of multiple modes may provide flexible precision while minimizing dynamic power consumption.

The dual-mode architecture of the scaled multiply circuit 650 enables the system to adapt to varying network precision requirements (e.g., quantized 8-bit or extended 12-bit weight formats), which may be determined per-layer or per-operation depending on accuracy or power constraints. By supporting both narrow and wide formats in hardware, the scaled multiply circuit 650 may reduce (e.g., avoid) the need for separate multiplier pipelines, thereby reducing silicon cost while preserving flexibility.

In some examples, the mode signal may be configured by software during initialization or dynamically updated based on workload requirements, enabling adaptive precision per neural network layer or per operation. The architecture allows for hardware reuse between modes, minimizing area and power without duplicating entire data paths. Compared to conventional designs requiring separate multiplier pipelines for different bit-widths, the dual-mode scaled multiply circuit 750 reduces silicon complexity while maintaining flexibility. Additionally, the shift control logic may support configurable shift patterns (e.g., linear, double, or triple left shifts), enhancing support for a variety of quantization schemes.

The scaled multiply circuit 750 includes a multiplier 708-1 and a multiplier 708-2. The scaled multiply circuit 750 includes an adder 741. The scaled multiply circuit 750 includes a multiplexer 721, a multiplexer 747, a multiplexer 723, a multiplexer 745, and a multiplexer 719, each of which is controlled by a model signal. The scaled multiply circuit 650 includes a shifter 725. The scaled multiply circuit 750 includes a sign extension logic 727. The scaled multiply circuit 750 includes a padding logic 729, and a padding logic 743.

In some examples, the multiplexer 721 receives the input value 735a (e.g., sixteen-bits) at a first input and a zero-value (e.g., sixteen-bits) at a second input. The output of the multiplexer 721 (e.g., 16 bits) is provided to the multiplier 708-1 and the multiplexer 723. The scaled multiply circuit 750 provides a portion of bits (e.g., bits 5:0) (e.g., six-bits) from the weight 714 to the multiplier 708-1, and a portion of bits (e.g., bits 7:6) (e.g., two-bits) to the multiplexer 719 and the multiplexer 747. The multiplier 708-1 is configured to multiply its two inputs (e.g., the output of the multiplexer 721 and bits 5:0), producing a multiplication result (e.g., 22-bit output). The output of the multiplier 708-1 is provided to the sign extension logic 727 and the multiplier 708-2.

The multiplier 708-2 is configured to multiply the output of the multiplier 708-1 by an output (e.g., a two-bit value) of the multiplexer 747. The output of the multiplier 708-2 (e.g., 24 bits) is provided to the padding logic 729 (e.g., 0 padding of 6 LSBs). The sign extension logic 727 is configured to receive the output of the multiplier 708-1 and perform a sign extension operation (e.g., a 2-bit sign extension), producing an output (e.g., 24-bit output).

The adder 741 is configured to sum the output of the sign extension logic 727 and the output of the padding logic 729. The output of the adder 741 (e.g., 24 bits) is provided to the padding logic 743 (e.g., 0 padding of 4 LSBs), which produces an output (e.g., 28-bit output).

The multiplexer 723 receives the output of the multiplexer 721 (e.g., or an intermediate product or a zero-value) at a first input and a zero-value (e.g., 28 bits) at a second input, and its output is provided to the shifter 725. The shifter 725 is configured to perform a shift operation (e.g., shift left 0/2/4/6), controlled by shift bits (e.g., shift bits 2:0). The outputs of the padding logic 743 (e.g., 28 bits) and the shifter 725 (e.g., 28 bits) are provided to the multiplexer 745. The multiplexer 745 is configured to select one of these inputs as the final output of the scaled multiply circuit 750.

In a first mode (e.g., an N-bit mode), the scaled multiply circuit 750 is configured to generate an N-bit output precision. In the first mode, the multiplexer 747 is configured to route a portion of bits (e.g., bits 7:6) from the weight 714 to the multiplier 708-2. The multiplier 708-2 thus participates in the multiplication, contributing to the overall result. Furthermore, in the first mode, the shifter 725 and its associated logic (e.g., inputs from the multiplexer 723, or its control from the multiplexer 719 setting shift bits 1:0 to zero) are isolated to avoid dynamic power consumption due to toggling of the shifter logic. The final output of the scaled multiply circuit 750 is provided by the multiplexer 745 selecting the output of the padding logic 743.

In a second mode (e.g., an M-bit mode, such as a 12-bit mode), the scaled multiply circuit 750 is configured to support a larger dynamic range. In the second mode, the multiplexer 747 is configured to route a zero-value (e.g., 2 bits) to the multiplier 708-2, effectively isolating its inputs to avoid dynamic power consumption from toggling of the multiplier logic. This may ensure that the multiplier 708-2 does not actively contribute to the multiplication result in this mode. The multiplexer 719 is configured to route some bits (e.g., bits 7:6) from the weight 714 to shift bits 1:0 of the shifter 725, providing control for the double shift operation. The shifted output of the shifter 725 is provided to the multiplexer 745. The final output of the scaled multiply circuit 750 is provided by the multiplexer 745 selecting the output of the shifter 725. This configuration may allow the scaled multiply circuit 750 to adapt between different precision requirements, optimizing power consumption based on the selected mode of operation.

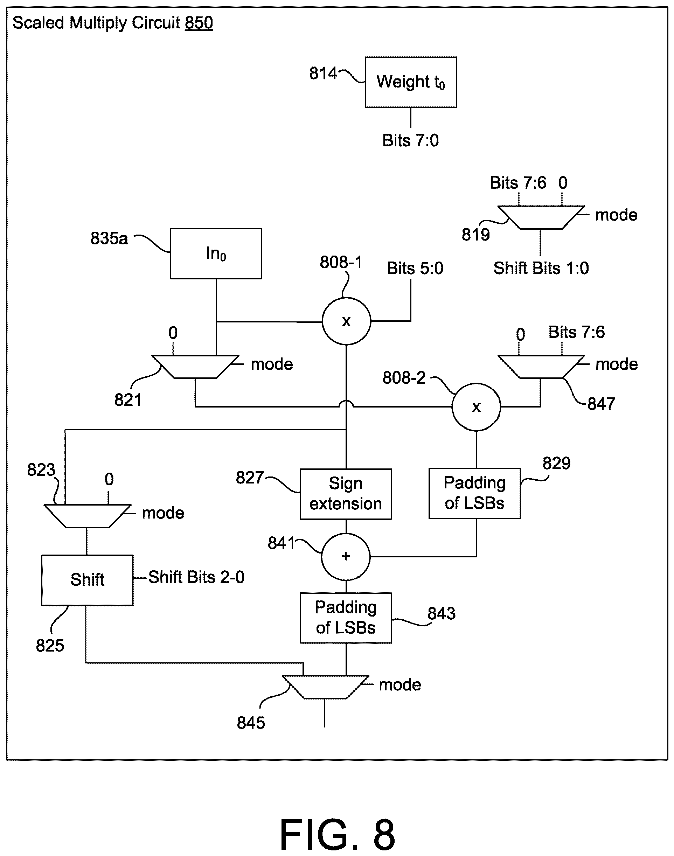

FIG. 8 illustrates a scaled multiply circuit 850 according to another aspect. The scaled multiply circuit 850 is configured to receive an input value 835a and a weight 814. In some examples, the input value 835a has a Z-bit input value (e.g., a sixteen-bit input value). In some examples, the weight 814 has an N-bit input value (e.g., an eight-bit weight). In some examples, the parameter Z is greater than the parameter N. The scaled multiply circuit 850 is designed to operate in multiple modes, such as a first mode (e.g., an N-bit mode) or a second mode (e.g., an M-bit mode). The use of multiple modes may provide flexible precision while minimizing dynamic power consumption. The use of triple shifts (e.g., 0, 3, 6, 9) may enable a finer control over dynamic range expansion as compared to linear or double shifts, allowing the scaled multiple circuit 850 to efficiently process weights with broader distribution without significant loss of resolution.

The scaled multiply circuit 850 includes a multiplier 808-1 and a multiplier 808-2. The scaled multiply circuit 850 includes an adder 841. The scaled multiply circuit 850 includes a multiplexer 821, a multiplexer 847, a multiplexer 823, a multiplexer 845, and a multiplexer 819, each of which is controlled by a model signal. The scaled multiply circuit 850 includes a shifter 825. The scaled multiply circuit 850 includes a sign extension logic 827. The scaled multiply circuit 850 includes a padding logic 829, and a padding logic 843.

In some examples, the multiplexer 821 receives the input value 835a (e.g., sixteen-bits) at a first input and a zero-value (e.g., sixteen-bits) at a second input. The output of the multiplexer 821 (e.g., 16 bits) is provided to the multiplier 808-1 and the multiplexer 823. From the weight 814, the scaled multiply circuit 850 provides a portion of bits (e.g., bits 5:0) (e.g., six-bits) to the multiplier 808-1, and a portion of bits (e.g., bits 7:6) (e.g., two-bits) to the multiplexer 819 and the multiplexer 847. The multiplier 808-1 is configured to multiply its two inputs (e.g., the output of the multiplexer 821 (which itself can be the input value 835a) and the bits 5:0 from the weight 814), generating a multiplication result (e.g., a 22-bit output). The multiplication result is provided to the sign extension logic 827 and the multiplier 808-2.

The multiplier 808-2 is configured to multiply the output of the multiplier 808-1 by an output (e.g., a two-bit value) of the multiplexer 847. The output of the multiplier 808-2 (e.g., 24 bits) is provided to the padding logic 829 (e.g., 0 padding of 6 LSBs). The sign extension logic 827 is configured to receive the output of the multiplier 808-1 and perform a sign extension operation (e.g., 2-bit sign extension), producing an output (e.g., 24-bit output).

The adder 841 is configured to sum the output of the sign extension logic 827 and the output of the padding logic 829. The output of the adder 841 (e.g., 24 bits) is provided to the padding logic 843 (e.g., 0 padding of 7 LSBs), which produces an output (e.g., 31-bit output).

The multiplexer 823 receives an intermediate multiplication product or a zero-value (e.g., 31 bits) at a first input and a zero-value (e.g., 31 bits) at a second input, and its output is provided to the shifter 825. The shifter 825 is configured to perform a shift operation (e.g., shift left 0/3/6/9), controlled by shift bits (e.g., shift bits 2:0). The outputs of the padding logic 843 (e.g., 31 bits) and the shifter 825 (e.g., 31 bits) are provided to the multiplexer 845. The multiplexer 845 is configured to select one of these inputs as the final output of the scaled multiply circuit 850. The resulting high bit output may be aligned with a corresponding accumulator width to support high-precision partial sums across layers, particularly in architectures requiring extended dynamic range (e.g., transformer models or mixed-precision CNNs).

In a first mode (e.g., an N-bit mode, such as an 8-bit mode), the scaled multiply circuit 850 is configured to route a portion of bits (e.g., bits 7:6) from the weight 814 to the multiplier 808-2. The multiplier 808-2 thus participates in the multiplication, contributing to the overall result. Furthermore, in the first mode, the shifter 825 and its associated logic (e.g., inputs from the multiplexer 823, or its control from the multiplexer 819 providing a zero-value for shift bits 1:0) are isolated to avoid dynamic power consumption due to toggling of the shifter logic. The final output of the scaled multiply circuit 850 is provided by the multiplexer 845 selecting the output of the padding logic 843, which outputs a 31-bit multiplication result with the 7 least significant bits set to zero.

In a second mode (e.g., an M-bit mode, such as a 15-bit mode), the scaled multiply circuit 850 is configured to support a larger dynamic range. In the second mode, the multiplexer 847 is configured to route a zero-value (e.g., 2 bits) to the multiplier 808-2, effectively isolating its inputs to avoid dynamic power consumption from toggling of the multiplier logic. This may ensure that the multiplier 808-2 does not actively contribute to the multiplication result in this mode. The multiplexer 819 is configured to route some bits (e.g., bits 7:6) from the weight 814 to shift bits (e.g., shift bits 1:0) of the shifter 825, providing control for the triple shift operation (e.g., shift left 0/3/6/9). The shifted output of the shifter 825 is provided to the multiplexer 845. The final output of the scaled multiply circuit 850 is provided by the multiplexer 845 selecting the output of the shifter 825. This configuration may allow the scaled multiply circuit 850 to adapt between different precision requirements, optimizing power consumption based on the selected mode of operation. The selective gating and mode-based multiplexer controls may allow the shifter and secondary multiplier blocks to remain idle when not needed, thereby reducing toggle rate and dynamic power consumption. This isolation may be achieved without dedicated clock gating, relying solely on combinational muxing logic.

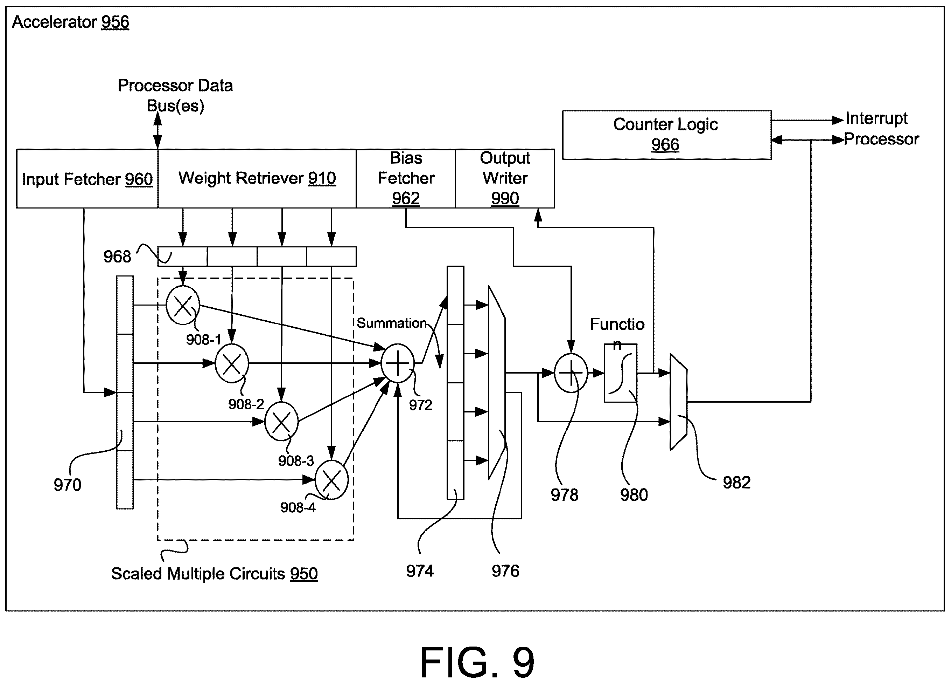

FIG. 9 illustrates an accelerator 956 according to another aspect. The accelerator 956 may be an example of the accelerator 156 of FIGS. 1A to 1C and/or the accelerator 256 of FIG. 2B and may include any of the details discussed with reference to those figures.

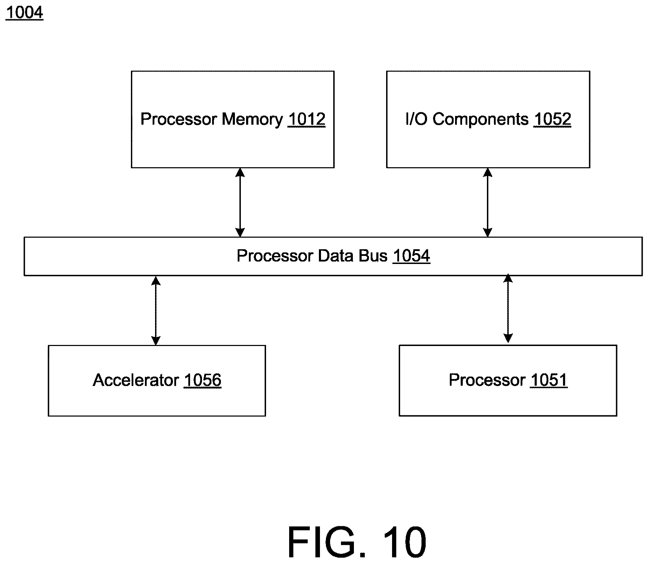

The accelerator 956 includes an input data fetcher 960, a weight retriever 910, a bias fetcher 962, and an output writer 990. Also, the accelerator 956 includes a counter logic 966 configured to generate an interrupt command and interface with a processor memory (e.g., a processing memory 1012 of FIG. 10). Each of the input data fetcher 960, the weight retriever 910, the bias fetcher 962, and the output writer 990 may interface with a processor data bus (e.g., a processor data bus 1054 of FIG. 10). In some examples, the input data fetcher 960 is a circular buffer configured to receive input data. In some examples, the input data includes audio samples in a frequency domain. The input data fetcher 960 can hold the audio length on which the neural network is executed (e.g., 0.4 to 2 seconds). However, the accelerator 956 is not limited to audio processing, where the accelerator 956 may be used for any type of application.

The weight retriever 910 may retrieve the weights from the processor memory. The accelerator 956 also includes input registers 970 configured to receive input data from the input data fetcher 960, and weight registers 968 configured to receive the weights from the weight retriever 910.

The accelerator 956 includes a plurality of scaled multiple circuits 950. A scaled multiply circuit 950 may be any of the scaled multiply circuits discussed herein such as the scaled multiply circuit 150 of FIGS. 1A to 1C, the scaled multiply circuit 250 of FIGS. 2A and 2B, the scaled multiply circuit 350 of FIG. 3, the scaled multiply circuit 450 of FIG. 4, the scaled multiply circuit 650 of FIG. 6, the scaled multiply circuit 750 of FIG. 7, or the scaled multiply circuit 850 of FIG. 8. Each input-weight multiplier is associated with a separate scaled multiply circuit 950. As shown in FIG. 9, the accelerator 956 includes a first input-weight multiplier 908-1, a second input-weight multiplier 908-2, a third input-weight multiplier 908-3, and a fourth input-weight multiplier 908-4. Although four input-weight multipliers are shown in FIG. 9, the number of input-weight multipliers may be any number greater than four, such as twenty input-weight multipliers, forty input-weight multipliers, sixty input-weight multipliers, etc.

The organization of the scaled multiply circuits 950 (e.g., including the input-weight multipliers) and their associated data paths allows reuse of stable input data across multiple accumulator cycles while new weights are loaded sequentially for each concurrently processed neuron. In some examples, pruning is applied uniformly across groups of neurons corresponding to the number of multipliers (e.g., four or eight), such that the pruning granularity aligns with the architecture's parallelism and supports efficient reuse of loaded inputs.

The accelerator 956 includes a summation unit 972 configured to sum the results of the scaled multiply circuits 950. The accelerator 956 includes accumulator registers 974 to receive the results of the summation unit 972, and an accumulator 976 to accumulate the contents of the accumulator registers 974. The accelerator 956 includes a bias adder 978 that receives the bias from the bias fetcher 962 and adds the bias to the output of the accumulator 976. The accelerator 956 includes an activation function 980. The activation function 980 may be linear unit (ReLu), sigmoid, or hyperbolic tangent (TanH). In some examples, the activation function 980 may be implemented as a look up table. The accelerator 956 includes a multiplexer 982 configured to generate the output of the neural network layer. The accelerator 956 is configured to maintain input data stability across multiple accumulator cycles for a given group of neurons, reducing the frequency of input fetch operations and allowing the reuse of input vectors while cycling through weights for different neurons. This approach further contributes to efficient execution of heavily pruned networks by aligning memory access patterns with hardware parallelism, while minimizing redundant input loading.

The operation of the accelerator 956 generally includes the processing of multiple neurons (e.g. four as shown) over multiple synapses (e.g., weights). In the first cycle, four synapses associated with a first neuron are multiplied with four input values (e.g., layer inputs) and the sum is stored in one of the accumulator registers 974. In a second cycle, a different set of synapses (e.g., weights) associated with a second neuron is multiplied with the (same) four input values and the accumulated sum is stored in the next register of the accumulator registers 974. This process is repeated until all accumulator registers 974 are written. Once all accumulator registers 974 are written, a new set of four inputs for the first neuron are obtained, multiplied by weights, and accumulated with the previously stored register value. The process is continued until each node in the layer is computed. At this point, a bias is applied by the bias adder 978 to the neuron value and an activation function 980 to the neuron value before being applied to the multiplexer 982.

In some examples, the accelerator 956 allows software to control the neural network processing and either hardware or software to apply the activation function. The application of the activation function is configurable by selecting one of the inputs to the multiplexer 982. The upper input of the multiplexer 982 is selected when using hardware and the bottom input of the multiplexer 982 is selected when using software. When the activation function is applied in hardware, a write back of activation values is possible and a whole layer can be processed without interaction with the host processor (e.g., the processor 1051 of FIG. 10). In operation, a bias may be fetched from the memory and adding the bias to the accumulated sum. Then, the activation function may be performed in hardware and the resulting neuron values are stored in memory. This process may repeat for other neurons in the layer. After a number of neurons have been processed and stored, an interrupt signal can be generated (by the counter logic 966) for the host processor (e.g., the processor 1051 of FIG. 10). Upon receiving the interrupt signal and after updating the registers, the host processor (e.g., the processor 1051 of FIG. 10) can restart the accelerator 956 again for the next layer and the process repeats until the complete neural network has been processed.

FIG. 10 illustrates a neural network circuit 1004 according to an aspect. The neural network circuit 1004 may be an example of the neural network circuit 104 of FIGS. 1A to 1C and may include any of the details with respect to those figures. The neural network circuit 1004 includes a processor memory 1012, input/output (I/O) components 1052, a processor data bus 1054, an accelerator 1056, and a processor 1051. In some examples, the processor 1051 is a host processor. In some examples, the neural network circuit 1004 is a system on chip (SOC) (e.g., an integrated circuit coupled to a semiconductor substrate). In some examples, the neural network circuit 1004 is part of a speech or sound recognition device. In some examples, the neural network circuit 1004 is part of a hearing aid device. Although the following description relates to a speech or sound recognition device, the concepts discussed herein may be applied to other applications.

The neural network circuit 1004 may receive input values from the I/O components 1052 (e.g., a microphone) and to recognize the input values by processing a neural network trained to recognize particular input values as having particular meanings. For example, the input values may be Mel-frequency cepstral coefficients (MFCC) generated from an audio stream. In some examples, frames audio samples are captured periodically (e.g., every 10 milliseconds) and are transformed into a frequency domain for input to the neural network (e.g., the neural network 106 of FIG. 1A).

The processor 1051 is coupled to the processor data bus 1054. In some examples, the processor 1051 may perform a portion (e.g., none, part) of the processing for the neural network via software running on the processor 1051. The processor memory 1012 is coupled to the processor data bus 1054. In some examples, the processor memory 1012 includes the memory devices 112 of FIGS. 1A to 1C. The accelerator 1056 is coupled to the processor data bus 1054. The accelerator 1056 may be an example of the accelerator 156 of FIGS. 1A to 1C and/or the accelerator 256 of FIG. 2B.

The accelerator 1056 may include one or more scaled multiply circuits 950. A scaled multiply circuit may be any of the scaled multiply circuits discussed herein such as the scaled multiply circuit 150 of FIGS. 1A to 1C, the scaled multiply circuit 250 of FIGS. 2A and 2B, the scaled multiply circuit 350 of FIG. 3, the scaled multiply circuit 450 of FIG. 4, the scaled multiply circuit 650 of FIG. 6, the scaled multiply circuit 750 of FIG. 7, or the scaled multiply circuit 850 of FIG. 8.

The accelerator 1056 may perform a portion (e.g., all, part) of the processing for the neural network. In some examples, the accelerator 1056 may use the same processor data bus 1054 and the same processor memory 1012 as the processor 1051. The accelerator 1056 may use the processor data bus 1054 when it is not in use by the processor 1051. For implementations in which tasks (e.g., computations) of the neural network are split between the accelerator 1056 and the processor 1051, the accelerator 1056 may trigger the processor 1051 to perform a task by generating an interrupt signal. Upon receiving the interrupt signal, the processor 1051 may read input values from the (shared) processor memory 1012, perform the task, write the results to the processor memory 1012, and return control to (i.e., restart) the accelerator 1056. When splitting tasks between the accelerator 1056 and processor 1051, the shared pruning information and memory layout enable seamless transitions and efficient division of labor between hardware and software processing paths.

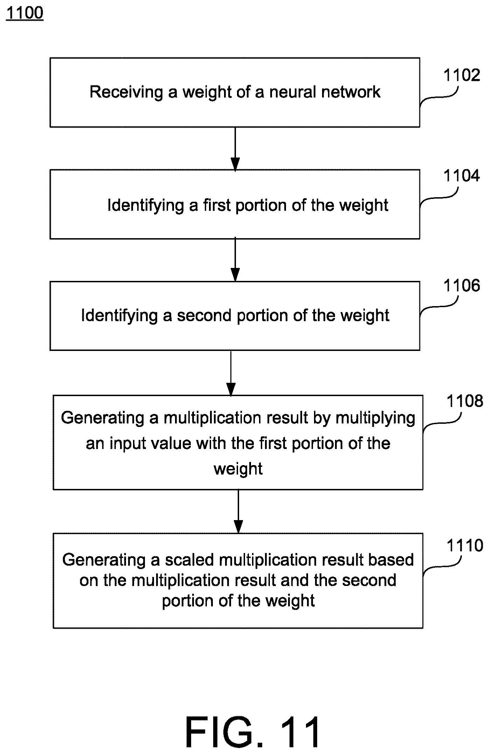

FIG. 11 illustrates a flowchart 1100 depicting example operations of using weights in an integer-exponent format for computing multiplication operations. Although the flowchart 1100 of FIG. 11 illustrates the operations in sequential order, it will be appreciated that this is merely an example, and that additional or alternative operations may be included. Further, operations of FIG. 11 and related operations may be executed in a different order than that shown, or in a parallel or overlapping fashion.

Operation 1102 includes receiving a weight of a neural network. Operation 1104 includes identifying a first portion of the weight. Operation 1106 includes identifying a second portion of the weight. Operation 1108 includes generating a multiplication result by multiplying an input value with the first portion of the weight. Operation 1110 includes generating a scaled multiplication result based on the multiplication result and the second portion of the weight.

In some examples, the accelerator discussed herein may employ a number format using two's complement integer and exponent (e.g., single, double, or triple shift) with or without implied MSB (most significant bit), resulting in float-point like properties (larger dynamic range than integer format). In some examples, the accelerator's decoding logic may be computationally inexpensive to recreate an implied MSB after the sign bit of the two's complement integer value and single shift value (e.g., only applies to a number format with implied MSB). In some examples, the accelerator's multiply and accumulate hardware architecture uses an integer multiplier followed by a shifter with an integer result. This configuration may provide a smaller gate count than a standard integer multiplier, while the output is in an integer with a larger precision). Use in neural network hardware to have weights (optionally biases as well) with a larger dynamic range for the same or similar cycle count, dynamic power consumption, gate count, die area, leakage, and/or memory usage.

In the specification and/or figures, typical embodiments have been disclosed. The present disclosure is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

Unless defined otherwise, all technical and scientific terms used herein have the same meaning as commonly understood by one of ordinary skill in the art. Methods and materials similar or equivalent to those described herein can be used in the practice or testing of the present disclosure. As used in the specification, and in the appended claims, the singular forms "a," "an," "the" include plural referents unless the context clearly dictates otherwise. The term "comprising" and variations thereof as used herein is used synonymously with the term "including" and variations thereof and are open, non-limiting terms. The terms "optional" or "optionally" used herein mean that the subsequently described feature, event or circumstance may or may not occur, and that the description includes instances where said feature, event or circumstance occurs and instances where it does not. Ranges may be expressed herein as from "about" one particular value, and/or to "about" another particular value. When such a range is expressed, an aspect includes from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint.

While certain features of the described implementations have been illustrated as described herein, many modifications, substitutions, changes, and equivalents will now occur to those skilled in the art. It is, therefore, to be understood that the appended claims are intended to cover all such modifications and changes as fall within the scope of the implementations. It should be understood that they have been presented by way of example only, not limitation, and various changes in form and details may be made. Any portion of the apparatus and/or methods described herein may be combined in any combination, except mutually exclusive combinations. The implementations described herein can include various combinations and/or subcombinations of the functions, components, and/or features of the different implementations described.

## Claims

1. A method comprising:
receiving a weight of a neural network;
identifying a first portion of the weight;
identifying a second portion of the weight;
generating a multiplication result by multiplying an input value with the first portion of the weight; and
generating a scaled multiplication result based on the multiplication result and the second portion of the weight.

2. The method of claim 1, wherein generating the scaled multiplication result includes:
shifting the multiplication result according to a shift value represented by the second portion of the weight.

3. The method of claim 1 or 2, further comprising:
generating, by a plurality of logic gates, a decoded weight based on the weight, the decoded weight having a number of bits greater than the weight; and
identifying the first portion and the second portion from the decoded weight.

4. The method of claim 3, further comprising:
discarding a bit from the scaled multiplication result.

5. The method of any one of claims 1 to 4, wherein the second portion of the weight represents an exponent value encoded to control a shift operation.

6. The method of any one of claims 1 to 5, wherein the first portion of the weight includes a signed integer value, and the second portion includes an unsigned value.

7. The method of any one of claims 1 to 6, wherein the first portion and the second portion are identified based on a mode signal indicating one of a plurality of encoding formats.

8. A computer-program product storing executable instructions that cause at least one processor to execute operations of any one of claims 1 to 7.

9. An apparatus comprising:
a memory configured to store a weight of a neural network;
a multiplier configured to generate a multiplication result by multiplying an input value with a first portion of the weight; and
a scaled generator configured to generate a scaled multiplication result based on the multiplication result and a second portion of the weight.

10. The apparatus of claim 8, wherein the scaled generator includes a shifter configured to shift the multiplication result according to a shift value represented by the second portion of the weight.

11. The apparatus of claim 10, wherein the shifter is configured to perform one of a linear shift, a double shift, or a triple shift based on the second portion of the weight.

12. The apparatus of any one of claims 9 to 11, wherein the weight includes a plurality of bits, and the first portion and the second portion are non-overlapping subsets of the plurality of bits.

13. The apparatus of any one of claims 9 to 12, further comprising:
a decoder configured to generate a decoded weight, the decoder including an implied most significant bit, wherein the first portion and the second portion are identified using the decoded weight.

14. The apparatus of any one of claims 9 to 13, wherein the scaled generator is configured to generate the scaled multiplication result by applying a shift operation to the multiplication result without computing a floating-point representation of the weight.

15. The apparatus of any one of claims 9 to 14, wherein the scaled generator includes a shifter and one or more multiplexers.
